# EUROPÄISCHE PATENTANMELDUNG

(11) **EP 4 640 443 A1**
(43) Veröffentlichungstag der Anmeldung: **29.10.2025**
(21) Anmeldenummer: 25172011.6
(22) Anmeldetag: 23.04.2025
(51) Int. Cl.: B60B 3/00, B60B 3/02

(54) **FAHRZEUGRAD FÜR EIN FAHRZEUG**

(30) Priorität: 26.04.2024 DE 102024111768
(71) Anmelder: Accuride Wheels Solingen GmbH, 42697 Solingen (DE)
(72) Erfinder: Schumacher, Jörg, 41844 Wegberg (DE)
(74) Vertreter: Bösherz Goebel Patentanwälte

(57) **Zusammenfassung**

Die Erfindung betrifft ein Fahrzeugrad (1), umfassend ein Schüsselsegment (2) und ein Felgensegment (3), wobei das Schüsselsegment (2) eine Radanlagefläche (10) zur Verbindung des Fahrzeugrades (1) mit einer Fahrzeugnabe und ein Übergangselement (11) umfasst, wobei das Übergangselement (11) zwischen der Radanlagefläche (10) und dem äußeren Felgenhorn (12) angeordnet ist, wobei das Felgensegment (3) ein äußeres (12) und ein inneres Felgenhorn (13) sowie ein zwischen den beiden Hörnern (12, 13) angeordnetes Felgentiefbett (16) umfasst, wobei die Segmente (2, 3) des Fahrzeugrads (1) einstückig aus einem metallischen Material, insbesondere aus einer Bandage, geformt, insbesondere umgeformt, sind, um eine einteilige, kontinuierlich verlaufende Fahrzeugradkontur auszubilden.

## Beschreibung

Die vorliegende Erfindung betrifft ein Fahrzeugrad gemäß der im Oberbegriff des Anspruchs 1 näher definierten Art.

### Stand der Technik

Fahrzeugräder in Stahlbauweise bestehen bekannterweise aus einer Felge und einer an der Felge angeordneten Radschüssel. Die Radschüssel wird beispielsweise bei Nutzfahrzeugrädern mit leichtem Übermaß in die Felge gepresst und dann dauerhaft mit einer umlaufenden (teilweise unterbrochenen) Schweißnaht verbunden. Die Radschüssel wird entweder in der Felge im Abschnitt eines Übergangsbereichs, dem sogenannten Ledge (zylindrischer Übergangsbereich zwischen Felgenschulter und Tiefbett) oder direkt im Tiefbett angebunden. Um dies zu erreichen, verlaufen die Konturen der Felge und Schüssel in axialer Richtung von der Radaußenseite bis zur Schweißnaht nebeneinander, was zu höherem Materialeinsatz und zu einer Art Spalt zwischen beiden Teilen führt. Der sich zwischen Radschüssel und Felgenkontur ergebende Spalt verschlechtert oftmals die Aerodynamik des Fahrzeugrads. Im Rahmen der aerodynamischen Optimierung nutzen deshalb einige Fahrzeughersteller Radkappen, um durch die vollflächige Abdeckung des Rades die Aerodynamik des Rades zu verbessern.

Es sind auch Bauformen mit einer Schüssel- und Felgenverbindung im äußeren Schulterbereich bekannt. Diese haben allerdings den deutlichen Nachteil, dass sich die Passform beider Teile aufgrund der Schulterschrägen von 5° bzw. 15° nur mit hohem Aufwand produzieren lässt und auch hier die Materialüberlappungen zu erhöhtem Materialaufwand und Mehrgewicht des Rades führen.

Es ist eine Aufgabe der vorliegenden Erfindung, die voranstehend beschriebenen Nachteile des Stands der Technik zumindest teilweise zu beheben. Insbesondere ist es Aufgabe der vorliegenden Erfindung, ein Rad mit einer verbesserten Aerodynamik und geringerem Materialeinsatz bereitzustellen. Ferner kann auch auf eine umlaufende Verbindungsschweißnaht vollständig verzichtet werden.

### Offenbarung der Erfindung

Gegenstand der Erfindung ist ein Fahrzeugrad mit den Merkmalen des Anspruchs 1. Weitere Merkmale und Details der Erfindung ergeben sich aus den jeweiligen Unteransprüchen, der Beschreibung und den Zeichnungen.

Gegenstand der Erfindung ist insbesondere ein Fahrzeugrad, umfassend ein Schüsselsegment und ein Felgensegment, wobei das Schüsselsegment eine Radanlagefläche zur Verbindung des Fahrzeugrades mit einer Fahrzeugnabe und ein Übergangselement umfasst, wobei das Übergangselement zwischen der Radanlagefläche und dem äußeren Felgenhorn angeordnet ist, wobei das Felgensegment ein äußeres und ein inneres Felgenhorn sowie ein zwischen den beiden Hörnern angeordnetes Felgentiefbett umfasst. Die Segmente des Fahrzeugrads sind einstückig aus einem metallischen Material, insbesondere aus einer Bandage oder einer Ronde, geformt, insbesondere umgeformt, um eine einteilige, kontinuierlich verlaufende Fahrzeugradkontur auszubilden.

Das metallische Material kann als eine Bandage aus einem metallischen Material vorgesehen sein. Die Bandage kann aus einem metallischen Material wie z. B. einer Stahl- oder Aluminiumlegierung bereitgestellt sein. Die Form der Bandage kann so ausgebildet sein, dass die Abfallmenge bei der Herstellung des Fahrzeugrads so gering wie möglich ausfällt. Die Bandage kann eine erforderliche Länge und Breite umfassen, um das benötigte Fahrzeugrad herzustellen. Alternativ kann auch eine Ronde anstelle der Bandage verwendet werden, um das erfindungsgemäße Fahrzeugrad zu fertigen. Das einteilige Fahrzeugrad ermöglicht es, dass das Schüsselsegment und das Felgensegment weder eine Überlappung noch eine Verbindungsschweißnaht benötigt im Vergleich zu einer mit einer Radfelge zusammengeschweißten Radschüssel eines zweiteiligen Fahrzeugrads. Dies hat den Vorteil, dass das Rad als einteiliges Fahrzeugrad keinerlei umlaufende Schweißnaht- oder Schweißnahtverbindungen aufweist. Dies hat ferner den Vorteil, dass der Konturenverlauf des Schlüsselsegments direkt mit dem Felgensegment, insbesondere mit dem äußeren Felgenhorn, verbunden ist und eine geschlossene außenseitige Kontur des Fahrzeugrads bewirkt, so dass ohne Verwendung einer bekannten Radabdeckung die vorteilhaften aerodynamischen Eigenschaften einer solchen Radabdeckung erzielt werden. Ferner ermöglicht der Konturenverlauf des Fahrzeugrads von der Radanlagefläche bis zum äußeren Felgenhorn eine Materialeinsparung beim Fahrzeugrad, die sich günstig auf den CO2-Fussabdruck des Rads auswirkt. Ferner hat der Entfall einer umlaufenden Schweißnaht zwischen Schlüssel- und Felgensegment den Vorteil, Gewicht und Energieverbrauch in der Fertigung des Fahrzeugrads einzusparen. Eine möglicherweise verwendete Radabdeckung wird vorteilhafterweise bis auf den Bereich des Verschraubungssystems reduziert werden, was nochmals Kosten und Gewicht einspart.

Es ist möglich, dass das Übergangselement des Schüsselsegments zwischen der Radanlagefläche des Schüsselsegments und einer radial äußeren Seite des äußeren Felgenhorns des Felgensegments angeordnet ist.

Es ist weiter denkbar, dass die Segmente des Fahrzeugrads einstückig aus einer Bandage oder einer Ronde umgeformt sind, um eine einteilige, kontinuierlich verlaufende Fahrzeugradkontur bereitzustellen.

Es kann weiter möglich sein, dass das Schüsselsegment und das Felgensegment des Fahrzeugrads einstückig aus einem metallischen Material umgeformt bzw. ausgebildet sind, wobei das metallische Material als eine metallische Vorform, eine Bandage oder eine Ronde ausgebildet ist.

Nach einer weiteren Möglichkeit ist die einstückig hergestellte Form der beiden Segmente des Fahrzeugrads durch ein Fließdrückverfahren umgeformt oder umformbar. Mit anderen Worten ist das erfindungsgemäße Fahrzeugrad und seine Segmente durch Kalt-Umformung hergestellt. Diese Verfahrensart unterscheidet sich im Vergleich zu den bekannten Gießverfahren, welche ein flüssiges metallisches Material zum Gießen eines Fahrzeugrads verwenden, dass für dass Gießen erhitzt werden muss. Ferner unterscheidet sich das erfindungsgemäße Fahrzeug vom Stand der Technik dadurch, dass die einteilige Form des Fahrzeugrads nicht geschmiedet wird, sondern mittels Flow-Forming umgeformt bzw. hergestellt wird.

In einer weiteren Möglichkeit kann vorgesehen sein, dass das Übergangselement des Schüsselsegments eine Materialdicke aufweist, welche durch ein Fließdrückverfahren variabel ausgebildet ist, um eine Festigkeit des Fahrzeugrads zu verbessern.

Vorteilhaft ist es zudem, wenn die Materialdicke des Übergangselements so ausgebildet ist, dass eine Außenkontur des Übergangselements einen wellenförmigen Konturenverlauf aufweist.

Nach einer weiteren Möglichkeit kann vorgesehen sein, dass wellenförmig als eine Änderung der Außenkontur von konvex nach konkav nach konvex oder umgekehrt spezifiziert ist.

Dies ermöglicht es, dass das Schüsselsegment, insbesondere das Übergangselement, während der Anwendung des Fließdrückprozesses belastungs- und/oder gewichtsoptimiert geformt bzw. umgeformt oder flow-geformt wird, so dass unterschiedliche Materialdicken abschnittsweise bereitgestellt werden können. Das Schüsselsegment kann einen bedeutenden Einfluss auf die Verteilung der Last des Fahrzeugs auf das Fahrzeugrad haben, weswegen eine abschnittsweise Herstellung der Materialdicke des Schlüsselsegments vorteilhaft ist. Dies kann auf Basis eines Fließdrückprozesses gewährleistet werden. Ferner hat dies den Vorteil, dass die fahrzeugtechnischen Eigenschaften des Fahrzeugs wie z.B. das Handling, Beschleunigung, Verzögerung, und die Fahrsicherheit bei einer abschnittsweisen Reduzierung der Materialdicke des Schüsselsegments zumindest erhalten bzw. verbessert werden können. Ferner können Anpassungen der Kontur des Schüsselsegments des einteiligen Fahrzeugrads zur Kompensierung von etwaigen Steifigkeitsverlusten aufgrund geringerer Materialdicken durchgeführt werden.

Nach einer weiteren Möglichkeit kann vorgesehen sein, dass die Materialdicke des Übergangselements radial zum äußeren Felgenhorn, insbesondere zur radial äußeren Seite des äußeren Felgenhorns, hin nach und nach abnimmt.

Dies ermöglicht es, dass in Abhängigkeit von einer jeweiligen Materialdicke eine bestmögliche Kombination aus Gewicht des Fahrzeugrads und dessen Festigkeit erreicht wird.

Ferner kann im Rahmen der Erfindung vorgesehen sein, dass das Übergangselement direkt an dem äußeren Felgenhorn des Felgensegments, insbesondere der radial äußeren Seite des äußeren Felgenhorns des Felgensegments , angeordnet ist, und wobei das Übergangselement und das äußere Felgenhorn als ein umlaufender, schweißnahtfreier Materialabschnitt des Fahrzeugrads ausgebildet ist.

Dies hat den Vorteil, dass durch den Wegfall einer Schweißnaht während der Herstellung des Fahrzeugrads Ressourcen und Gewicht deutlich höher eingespart werden können.

Es kann von Vorteil sein, wenn im Rahmen der Erfindung das Übergangselement bezogen auf eine zentrale Achse des Fahrzeugrads eine Ausrichtung aufweist, welche axial von außen nach innen, axial von innen nach außen oder im Wesentlichen senkrecht zur zentralen Achse des Fahrzeugrads gerichtet ist.

Dies hat den Vorteil, dass ein Fahrzeugrad auf Basis dieses Konstruktionsprinzips flexibel auf verschiedene Fahrzeugradtypen mit geeigneter Einpresstiefe angewendet werden kann. Als Einpresstiefe versteht man den axialen Abstand zwischen der inneren Anlagefläche des Rades und der Mitte der Felgenkontur. Ferner kann damit für verschiedene Fahrzeuge wie beispielsweise ein Personenkraftwagen (Pkw), ein Nutzfahrzeug, ein Lastkraftwagen (Lkw) oder ein Anhänger das benötigte Fahrzeugrad mit einer entsprechenden Ausrichtung des Übergangselements des Schüsselsegments bereitgestellt werden.

Es kann ferner möglich sein, dass das Übergangselement und/oder die Radanlagefläche jeweils so ausgebildet ist, dass ein außenseitiger, geschlossener Konturenverlauf bereitgestellt ist, um eine aerodynamische Wirkung des Fahrzeugrads zu erreichen.

Dies ermöglicht es, dass der Konturenverlauf des Schüsselsegments des Fahrzeugrads die vorteilhaften aerodynamischen Eigenschaften wie die einer entsprechenden separaten Radabdeckung gewährleistet. Ferner ermöglicht der Konturenverlauf des Fahrzeugrads von der Radanlagefläche bis zum äußeren Felgenhorn eine Materialeinsparung beim Fahrzeugrad zu bewirken, die sich günstig auf den CO₂-Fussabdruck des Produktes auswirkt.

In einer weiteren Möglichkeit kann vorgesehen sein, dass das Fahrzeugrad ein Ventil aufweist, welches an der äußeren Tiefbettschulter oder am Felgentiefbett des Felgensegments angeordnet ist und durch eine Aussparung des Übergangselements bedienbar ist.

Dies ermöglicht es, dass eine leichte und einfache Bedienung des Fahrzeugrads hinsichtlich der Befüllung eines luftbereiften Fahrzeugrads gewährleistet ist.

Optional ist es denkbar, dass das Felgensegment als eine 5°- oder 15°- Tiefbettfelge ausgebildet ist.

Dies ermöglicht es, dass eine Kompatibilität zu den verschiedenen Reifenkonstruktionen unterschiedlicher Fahrzeugtypen gewährleistet wird.

Es kann weiter möglich sein, dass das Fahrzeugrad ein metallisches Material aufweist, wobei das metallische Material eine Stahllegierung oder eine Aluminiumlegierung aufweist.

Dies hat den Vorteil, dass bei Verwendung einer entsprechenden Stahl- oder Aluminiumlegierung, vorzugsweise einer hochfesten Qualität, eine gute Umformbarkeit des Materials erreicht werden kann. Ferner ermöglicht dies, dass je nach Art des metallischen Materials eine Belastbarkeit gegenüber Schäden oder Verformbarkeit verbessert wird. Bei Verwendung von Aluminiumlegierungen kann zudem deutlich Gewicht gegenüber Rädern aus Stahl eingespart werden.

Optional ist es denkbar, dass an einer Innenseite des Übergangselements des Schüsselsegments mindestens ein Auswuchtelement angeordnet ist.

Durch die direkte Anbindung des Übergangselementes an das Felgenhorn entfällt die Möglichkeit auf der Radaußenseite ein Auswuchtschlaggewicht zu montieren. Als aerodynamisch vorteilhaft wird hier die Benutzung von Auswuchtklebegewichten auf der Radinnenseite vorgesehen.

Es ist möglich, dass das Felgensegment wenigstens einen Hump aufweist, welcher zwischen der äußeren Felgenschulter und Ledge bzw. Tiefbett angeordnet ist. Unter einem Hump kann man insbesondere eine erhöhte Rippe oder einen Wulst entlang des Umfangs des Felgensegments, insbesondere der Felgeninnenseite verstehen. Der Hump dient dazu, den Reifen auf der Felge bzw. auf dem Felgensegment zu fixieren und ein Verrutschen oder Abrutschen des Reifens zu verhindern, insbesondere bei niedrigem Reifendruck oder extremen Fahrbedingungen. Die Verwendung eines zweiten Humps an der hinteren oder inneren Felgenschulter des Felgensegments kann optional vorgesehen sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Skizze eines Radprofils gemäß Ausführungsbeispielen der Erfindung,
- Fig. 2: eine perspektivische Ansicht eines Fahrzeugrads gemäß Ausführungsbeispielen der Erfindung,
- Fig. 3: eine weitere perspektivische Ansicht eines Fahrzeugrads gemäß Ausführungsbeispielen der Erfindung, und
- Fig. 4: eine Schnittansicht eines Fahrzeugrads gemäß Ausführungsbeispielen der Erfindung.

In den nachfolgenden Figuren werden für die gleichen technischen Merkmale auch von unterschiedlichen Ausführungsbeispielen die identischen Bezugszeichen verwendet.

Kern der Erfindung ist insbesondere ein einteiliges Fahrzeugrad für ein Fahrzeug, welches einen durchgängigen Konturverlauf von der Radanlagefläche, über ein Übergangselement oder eine Verbindungzone zwischen Anlagefläche und äußerem Felgenhorn aufweist. Als Fahrzeug kann ein Personenkraftwagen oder ein Nutzfahrzeug oder ein Anhänger vorgesehen sein.

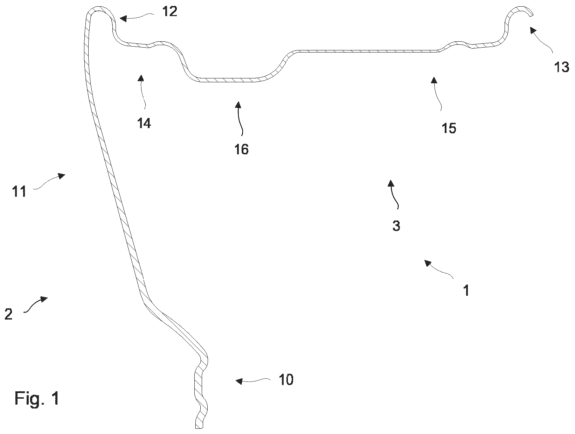

Fig. 1 zeigt eine schematische Skizze eines Profils eines Fahrzeugrads gemäß Ausführungsbeispielen der Erfindung. Fig. 1 stellt insbesondere einen schematischen Querschnitt eines erfindungsgemäßen Fahrzeugrads 1 dar, beispielsweise für einen Personenkraftwagen, für ein Nutzfahrzeug wie beispielsweise einen Stadtlieferwagen oder Kastenwagen oder für einen Anhänger. Das Fahrzeugrad 1 umfasst ein Schüsselsegment 2 und ein Felgensegment 3.

Das Schüsselsegment 2 umfasst eine Radanlagefläche 10 zur Verbindung des Rades 1 mit einer Fahrzeugnabe (Nabe nicht abgebildet) und ein Übergangselement 11, wobei das Übergangselement zwischen der Radanlagefläche 10 und dem äußeren Felgenhorn 12 angeordnet ist. Das Übergangselement 11 des Schüsselsegments 2 ist direkt an dem äußeren Felgenhorn 12 des Felgensegments 3, insbesondere einer radial äußeren Seite des äußeren Felgenhorns 12 des Felgensegments 3, angeordnet bzw. mit diesem einstückig verbunden.

Das Übergangselement 11 gemäß Fig. 1 ist bezogen auf eine zentrale Achse des Fahrzeugrads 1 mit einer Ausrichtung abgebildet, welche axial von außen nach innen gerichtet ist. Das in Fig. 1 abgebildete Radprofil kann zum Beispiel für einen Personenkraftwagen geeignet sein. Alternativ können auch weitere Ausrichtungen für das Übergangselement 11 bezogen auf die zentrale Achse des Fahrzeugrads wie beispielsweise axial von innen nach außen oder im Wesentlichen senkrecht zur zentralen Achse des Fahrzeugrads 1 vorgesehen sein. Das Übergangselement 11 und das äußere Felgenhorn 12 sind als ein umlaufender, schweißnahtfreier Materialabschnitt des Fahrzeugrads ausgebildet.

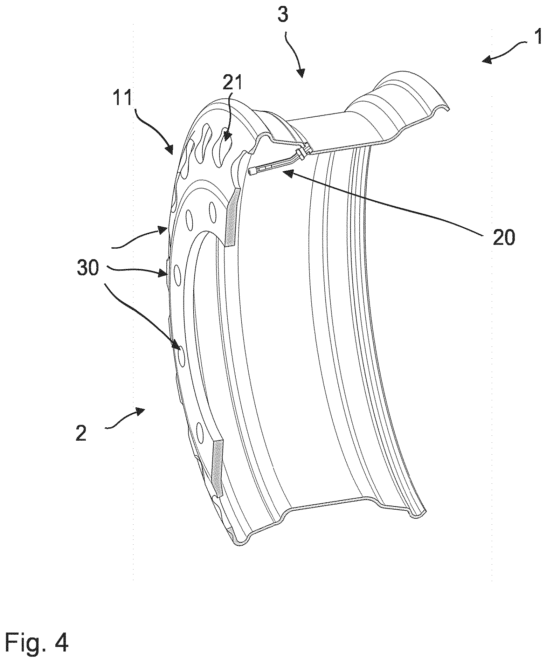

Das Felgensegment 3 kann z. B. als eine Tiefbettfelge 3 vorgesehen sein, welche beispielsweise als eine 5°- oder eine 15°-Steilschulterfelge ausgebildet sein kann. Das Felgensegment 3 kann ferner symmetrisch oder asymmetrisch ausgebildet sein. Das Profil des Felgensegments 3 kann unterschiedliche Abschnitte umfassen. Das Felgensegment 3 umfasst gemäß dem Ausführungsbeispiel in Fig. 1 ein äußeres und ein inneres Felgenhorn 12, 13 sowie eine äußere Felgenschulter 14 und eine innere Felgenschulter 15. Das äußere Felgenhorn 12 kann eine radial äußere Seite umfassen, welche auch als nach außen, d.h. vom Fahrzeug weg, gerichtete Felgenhornkante bezeichnet werden kann. Zwischen den beiden Felgenschultern 14, 15 ist ein Tiefbett 16 ausgebildet, das einen Tiefbettboden umfassen kann. Optional ist es möglich, dass sogenannte Humps zwischen den Felgenschultern 14, 15 und dem Tiefbett 16 angeordnet sein können. Ferner kann das Übergangselement 11 eine Aussparung 21 zur Ventildurchführung für ein Ventil 20 aufweisen oder Belüftungslöcher 21 , wie in Fig. 4 dargestellt, umfassen.

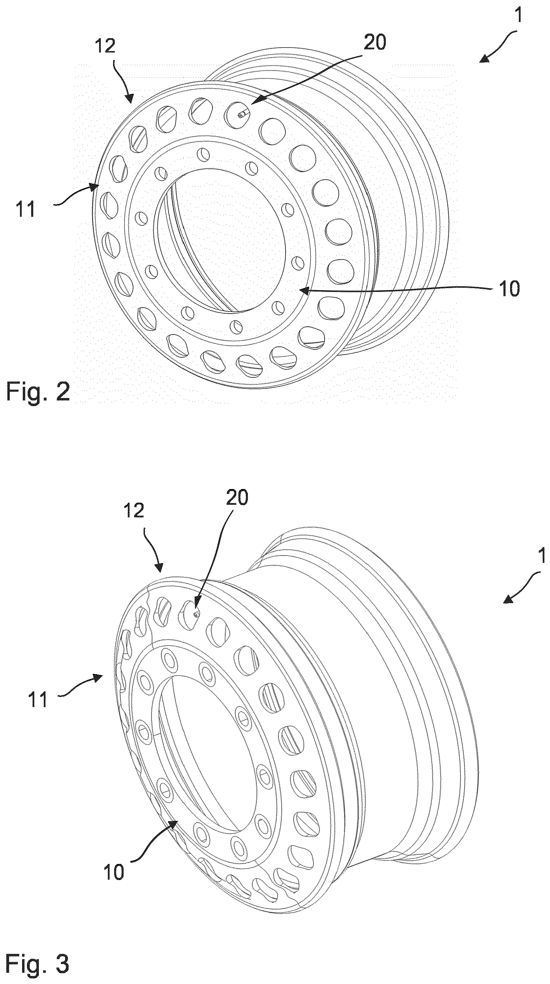

Fig. 2 und Fig. 3 stellen jeweils eine jeweilige perspektivische Ansicht eines Fahrzeugrads 1 gemäß Ausführungsbeispielen der Erfindung dar. Insbesondere sind in Fig. 2 und Fig. 3 jeweils ein Ausführungsbeispiel für ein Nutzfahrzeugrad abgebildet. Das jeweils abgebildete Übergangselement 11 in Fig. 2 oder Fig. 3 zeigt im Unterschied zu Fig. 1 ein Übergangselement 11, welches bezogen auf eine zentrale Achse des Fahrzeugrads 1 mit einer Ausrichtung, welche axial von innen nach außen (in Richtung der zentralen Achse gesehen) gerichtet ist. Ein solches Fahrzeugrad 1 kann beispielsweise für ein Nutzfahrzeug verwendet werden.

Fig. 2 zeigt das einteilige Fahrzeugrad 1 schräg von vorne umfassend das Schüsselsegment 2 und das Felgensegment 3. Insbesondere wird in Fig. 2 die Radanlagefläche 10 und das Übergangselement 11 dargestellt. Die Radanlagefläche 10 dient zur Verbindung des Fahrzeugrads 1 mit einer Fahrzeugnabe. Dazu können mehrere Befestigungslöcher 30 in der Radanlagefläche 10 vorgesehen sein. Ferner zeigt Fig. 2 eine beispielhafte Positionierung eines Ventils 20 an dem Fahrzeugrad 1. Für das so angeordnete Ventil 20 ist eine Aussparung im Übergangselement 11 vorgesehen. Diese Aussparung 21 kann als eines der Belüftungslöcher 21 vorgesehen sein. Zur weiteren aerodynamischen Optimierung kann es von Vorteil sein, die Belüftungslöcher in Anzahl und Größe zu reduzieren, oder optional deren Form in Rotationsrichtung aerodynamisch zu optimieren.

In Fig. 3 wird das einteilige Fahrzeugrad 1 schräg von oben abgebildet und zeigt insbesondere die das Felgensegment 3 mit dem dazugehörigen Felgenprofil zwischen dem äußeren 12 und inneren Felgenhorn 13. Ferner wird in Fig. 3 wie auch in Fig. 2 ein beispielhafter Verlauf einer variablen Materialdicke des Übergangselements 11 abgebildet, insbesondere als wellenförmiger Konturenverlauf der Außenkontur des Übergangselements. Optional kann vorgesehen sein, dass der wellenförmige Verlauf als eine Änderung der Außenkontur von konvex (nach außen gewölbt) nach konkav (nach innen gewölbt, d.h. zum Fahrzeug hin) nach konvex oder umgekehrt spezifiziert sein kann.

Fig. 4 zeigt das einteilige Fahrzeugrad 1 in einer Schnittdarstellung. Beispielsweise wird in Fig. 4 das Ventil 20 abgebildet, welches im Bereich der äußeren Felgenschulter 14 oder im Tiefbett 16 angeordnet sein kein. Um das Ventil bedienen zu können bzw. um beispielsweise Luft einfüllen zu können, ist im Bereich des Übergangselements 11, wie bereits zu Fig. 2 beschrieben, eine Aussparung 21 vorgesehen. Ferner wird in Fig. 4 das Schüsselsegment 2 mit einer variablen Materialdicke abgebildet. D.h. die Materialdicke des Übergangselements 11 gemäß dem Ausführungsbeispiel in Fig. 4 ist abschnittsweise unterschiedlich ausgeformt abgebildet. Dies kann beispielsweise mittels eines Fließdrückverfahrens hergestellt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeugrad
- 2: Schüsselsegment
- 3: Felgensegment

- 10: Radanlagefläche
- 11: Übergangselement
- 12: Äußeres Felgenhorn
- 13: Inneres Felgenhorn
- 14: Äußere Felgenschulter
- 15: Innere Felgenschulter
- 16: Felgentiefbett

- 20: Ventil
- 21: Belüftungslöcher, Aussparung

- 30: Befestigungslöcher

## Patentansprüche

1. Fahrzeugrad (1), umfassend ein Schüsselsegment (2) und ein Felgensegment (3), wobei das Schüsselsegment (2) eine Radanlagefläche (10) zur Verbindung des Fahrzeugrades (1) mit einer Fahrzeugnabe und ein Übergangselement (11) umfasst, wobei das Übergangselement (11) zwischen der Radanlagefläche (10) und dem äußeren Felgenhorn (12) angeordnet ist,
wobei das Felgensegment (3) ein äußeres (12) und ein inneres Felgenhorn (13) sowie ein zwischen den beiden Hörnern (12, 13) angeordnetes Felgentiefbett (16) umfasst,
**dadurch gekennzeichnet,**
**dass** die Segmente (2, 3) des Fahrzeugrads (1) einstückig aus einem metallischen Material, insbesondere aus einer Bandage oder einer Ronde, geformt, insbesondere umgeformt, sind, um eine einteilige, kontinuierlich verlaufende Fahrzeugradkontur auszubilden.

2. Fahrzeugrad (1) nach Anspruch 1,
**dadurch gekennzeichnet,**
**dass** das Übergangselement (11) des Schüsselsegments (2) eine Materialdicke aufweist, welche durch ein Fließdrückverfahren variabel ausgebildet ist, um eine Festigkeit des Fahrzeugrads (1) zu verbessern.

3. Fahrzeugrad (1) nach Anspruch 2,
**dadurch gekennzeichnet,**
**dass** die Materialdicke des Übergangselements (11) so ausgebildet ist, dass eine Außenkontur des Übergangselements einen wellenförmigen Konturenverlauf aufweist.

4. Fahrzeugrad (1) nach Anspruch 3,
**dadurch gekennzeichnet,**
**dass** wellenförmig als eine Änderung der Außenkontur von konvex nach konkav nach konvex oder umgekehrt spezifiziert ist.

5. Fahrzeugrad (1) nach Anspruch 2,
**dadurch gekennzeichnet,**
**dass** die Materialdicke des Übergangselements (11) radial zum äußeren Felgenhorn (12), insbesondere zur radial äußeren Seite des äußeren Felgenhorns (12), hin nach und nach abnimmt.

6. Fahrzeugrad (1) nach einem der vorhergehenden Ansprüche,
**dadurch gekennzeichnet,**
**dass** das Übergangselement (11) direkt an dem äußeren Felgenhorn (12) des Felgensegments (3), insbesondere der radial äußeren Seite des äußeren Felgenhorns (12) des Felgensegments (3), angeordnet ist, und wobei das Übergangselement (11) und das äußere Felgenhorn (12) als ein radial schweißnahtfreier Materialabschnitt des Fahrzeugrads (1) ausgebildet ist.

7. Fahrzeugrad (1) nach einem der vorhergehenden Ansprüche,
**dadurch gekennzeichnet,**
**dass** das Übergangselement (11) bezogen auf eine zentrale Achse des Fahrzeugrads (1) eine Ausrichtung aufweist, welche axial von außen nach innen, axial von innen nach außen oder im Wesentlichen senkrecht zur zentralen Achse des Fahrzeugrads (1) gerichtet ist.

8. Fahrzeugrad (1) nach einem der vorhergehenden Ansprüche,
**dadurch gekennzeichnet,**
**dass** das Übergangselement (11) und/oder die Radanlagefläche (10 jeweils so ausgebildet ist, dass ein außenseitiger, geschlossener Konturenverlauf bereitgestellt ist, um eine aerodynamische Wirkung des Fahrzeugrads (1) zu erreichen.

9. Fahrzeugrad (1) nach einem der vorhergehenden Ansprüche,
**dadurch gekennzeichnet,**
**dass** das Fahrzeugrad (1) ein Ventil (20) aufweist, welches an der äußeren Tiefbettschulter (14) oder am Felgentiefbett (16) des Felgensegments (3) angeordnet ist und durch eine Aussparung (21) des Übergangselements (11) bedienbar ist.

10. Fahrzeugrad (1) nach einem der vorhergehenden Ansprüche,
**dadurch gekennzeichnet,**
**dass** das Felgensegment (3) als eine 5°- oder 15°- Tiefbettfelge ausgebildet ist.
